**Europäisches Patentamt**

(19) **European Patent Office**

**Office européen des brevets**

(11) Veröffentlichungsnummer: **0 050 788**
**B1**

(12) # EUROPÄISCHE PATENTSCHRIFT

(45) Veröffentlichungstag der Patentschrift:
01.08.84

(51) Int. Cl.³: **F 24 J 3/04**, F 25 B 33/00

(21) Anmeldenummer: **81108260.1**

(22) Anmeldetag: **13.10.81**

(54) **Heizungsanlage mit einer Absorptionswärmepumpe und Verfahren zu deren Betrieb.**

(30) Priorität: **29.10.80  DE 3040628**
**03.04.81  DE 3113417**

(43) Veröffentlichungstag der Anmeldung:
**05.05.82 Patentblatt 82/18**

(45) Bekanntmachung des Hinweises auf die Patenterteilung:
**01.08.84 Patentblatt 84/31**

(84) Benannte Vertragsstaaten:
**AT BE CH FR GB IT LI LU NL**

(56) Entgegenhaltungen:
**DE - A - 2 756 910**
**FR - A - 1 588 610**
**FR - A - 2 015 605**
**FR - A - 2 076 505**
**US - A - 2 369 235**

(73) Patentinhaber: **Ruhrgas Aktiengesellschaft,**
**Huttropstrasse 60 Postfach 10 32 52,**
**D-4300 Essen 1 (DE)**

(72) Erfinder: **Sommers, Hans, Dipl.-Ing.,**
**Friedrich-List-Strasse 9, D-4300 Essen 1 (DE)**
Erfinder: **Jannemann, Theo, Dipl.-Phys., Am**
**Katenberg 36, D-4270 Dorsten 21 (DE)**

## Beschreibung

Die Erfindung betrifft eine Heizungsanlage mit einer gasbeheizten Adsorptionswärmepumpe, deren Austreiber in der Abgasführung des Gasbrenners angeordnet ist und deren Lösungs- bzw. Kältemittelkreislauf über Wärmetauscher mit dem Heizungswasserkreislauf gekoppelt ist, sowie ein Verfahren zum Betrieb der Heizungsanlage. Eine solche Anlage ist z.B. aus der DE-A-2 756 910 bekannt.

Die bisher bekannten gasbeheizten Adsorptionswärmepumpen-Heizungsanlagen — die systembedingt ohnehin niedrigere Leistungsziffern aufweisen, als Kompressionswärmepumpen-Heizungsanlagen — nutzen aus folgenden Gründen die in Form von Brenngas gelieferte Energie nicht vollständig aus:

Zur Beheizung des Austreibers wurden bisher konventionelle Brenner, z.B. unterstöchiometrisch arbeitende Vormischbrenner, eingesetzt, deren Wirkungsgrade — insbesondere deren Teillastwirkungsgrad — nicht sehr hoch sind. Das ist darin begründet, dass in die Brennkammer Sekundärluft in nicht regelbaren Mengen gelangen kann. Dies wirkt sich insbesondere beim Teillastbetrieb dahingehend aus, dass die Luftzahl stark ansteigt, d.h., die an der Verbrennung beteiligte Luftmenge beträgt z.B. das 2- bis 3fache der für die Verbrennung notwendigen Luftmenge, was eine Verringerung der Flammen- bzw. Abgastemperatur und infolgedessen eine nicht optimale Ausnutzung der zugeführten Energie zur Folge hat.

Der hohe Luftüberschuss hat den weiteren Nachteil, dass der Taupunkt der Abgase relativ niedrig ist. Deshalb ist eine Gewinnung der Abgaswärme, insbesondere der Kondensationswärme des im Abgas enthaltenen Wasserdampfes, auf einem nutzbaren Temperaturniveau nicht möglich. Daher ist bisher in der Praxis die optimale Nutzung der Abgaswärme, die grundsätzlich schon lange bekannt ist, noch nicht verwirklicht worden.

Der relativ hohe Schadstoffgehalt der Abgase, insbesondere der hohe Stickstoffoxid-Anteil, ist ein weiterer Nachteil der gebräuchlichen Brenner.

Die Beheizung sowohl von senkrecht stehenden als auch waagerecht liegenden Austreibern erfolgt bisher entweder durch unterhalb des Austreiberbodens oder parallel zur Längsachse angebrachte Brenner.

Bei senkrecht stehenden Austreibern wird das an Kältemittel reiche Lösungsmittel, die sog. reiche Lösung, in den oberen Teil des Austreibers eingeleitet, von wo es nach unten fliesst. Auf dem Weg durch den mittleren Teil nach unten wird durch Beheizung Kältemitteldampf ausgetrieben, der nach oben im Gegenstrom zur reichen Lösung strömt. Das an Kältemittel verarmte Lösungsmittel, die sog. arme Lösung, tritt im unteren Teil des Austreibers in eine Rohrleitung ein, die zum Absorber führt. Es ist verfahrensmässig am günstigsten, die zum Ausdampfen des Kältemittels notwendige Wärme bevorzugt an den mittleren Austreiberbereich zu übertragen, indem die Austreibung des Kältemittels zum Abschluss gebracht werden soll, bevor die entstehende arme Lösung den Reaktionsraum verlässt.

Die Beheizung des Austreiberbodens ist ungünstig, weil dabei die arme Lösung vor Eintritt in die Rohrleitung zum Absorber in unerwünschte Turbulenz gerät. Der untere Teil des Austreibers, in dem sich vorwiegend arme Lösung befindet, soll deshalb möglichst nicht direkt beheizt werden. Die Anbringung des Brenners unter dem Austreiber hat den weiteren Nachteil, dass dadurch die Bauhöhe des Austreibers vergrössert wird.

Weiterhin ist bekannt, dass die Heizung einer Absorptionswärmepumpen-Heizanlage bei sinkender Temperatur des als Wärmequelle für den Wärmetauscher mit dem Verdampfer dienenden Umgebungsmediums — insbesondere Aussenluft — in solchem Masse abnimmt, dass bei Unterschreiten einer Grenztemperatur — z.B. —5°C Lufttemperatur — der Wärmepumpen-Betrieb nicht mehr wirtschaftlich ist. Aus diesem Grunde wird meistens vorgeschlagen, unter solchen Aussenbedingungen die Beheizung mit Hilfe eines konventionellen Heizkessels, der zusätzlich bereitgestellt werden muss, vorzunehmen. Es sind zwar auch schon Absorptionswärmepumpen-Heizanlagen bekannt, die durch zusätzliche Bauteile und Umschaltmassnahmen im Wärmepumpenkreislauf eine Fahrweise im reinen Wärmetauscherbetrieb ermöglichen sollen, jedoch sind diese konstruktiv sehr aufwendig.

Aufgabe der Erfindung ist es, eine gattungsgemässe Heizungsanlage mit einer gasbeheizten Absorptionswärmepumpe zu schaffen, mit der die in Form von Brenngas aufgewendete Energie besser bzw. vollständiger als bisher ausgenutzt wird, d.h., die als Antrieb der Absorptionswärmepumpe dienende Wärme soll mit hohem Wirkungsgrad erzeugt werden und auf optimale Weise auf den Wärmepumpenkreislauf einwirken, um die Aufheizung des Heizungswassers mit einer geringeren Brenngasmenge als entsprechende bekannte Heizungsanlagen sowohl im Vollast- wie im Teillastbetrieb zu ermöglichen.

Darüber hinaus soll die Heizungsanlage einen grossen Regelbereich besitzen und ohne komplizierte bzw. aufwendige Änderung bzw. Umschaltung in den Umlaufsystemen für das Heizungswasser und die Stoffströme der Wärmepumpe in der Lage sein, den Heizwärmebedarf auch bei tiefen Aussentemperaturen zu decken. Insbesondere soll ein separater Heizkessel für die zuletzt genannten Bedingungen überflüssig sein.

Die Aufgabe wird durch die in den Ansprüchen 1 bis 12 genannten Merkmale und Massnahmen gelöst.

Die Erfindung lehrt zunächst, zur Beheizung des Austreibers der Absorptionswärmepumpe einen mit überstöchiometrischer Luftvormischung arbeitenden Gasbrenner zu verwenden, der aus einer oder mehreren Gasdüsen, einem oder mehreren parallelen Mischrohren, einer sich anschliessenden Mischkammer, einer aus gut wärmeleitendem Material bestehenden Brennerplatte und einer gegenüber Fremdluftzutritt geschlossenen Brennkammer besteht, an die sich der in der Abgasführung angeordnete Austreiber derart anschliesst, dass der Abstand zwischen Brennerplatte und Austreiber weniger als 50 mm, vorzugsweise weniger als 30 mm, beträgt. Die Brennerplatte weist eine Vielzahl von über den gesamten Brennerplattenquerschnitt verteilten Gemischdurchtrittsöffnungen, mindestens vier Öffnungen pro cm$^2$, sowie eine Kühlschlange auf, die in den Strömungsweg für die reiche Lösung zwischen Absorber und Austreiber eingebunden ist.

Auf die Funktionsweise der Absorptionswärmepumpe wird nicht näher eingegangen, da diese als bekannt vorausgesetzt werden kann und nicht Gegenstand dieser Erfindung ist.

Der im Hauptanspruch genannte ausserordentlich geringe Abstand zwischen Brennerplatte und Austreiber sowie die sich einstellende gleichmässige Flammenfront über dem gesamten Brennerplattenquerschnitt bewirken einen ausserordentlich guten Wärmeübergang auf den Austreiber. Weiterhin wird dadurch bewirkt, dass sich die bei herkömmlicher Beheizung aufgetragenen Strahlungsverluste des Brenners, insbesondere durch die Brennkammerwände, stark vermindern.

Die Kühlschlange der Brennerplatte wird von der aus dem Absorber kommenden reichen Lösung durchströmt, die auf diese Weise vor dem Eintritt in den Austreiber Wärme aufnimmt. Diese an der Brennerplatte aufgenommene Wärme wird damit in den Antriebsteil der Absorptionswärmepumpe einbezogen, und der effektive Wärmegewinn ist daher um einen der Heizzahl der Absorptionswärmepumpe entsprechenden Faktor höher als die an der Brennerplatte aufgenommene Wärmemenge.

Dadurch, dass die Brennerkammer nach aussen hin geschlossen ist, d.h., dass in sie ausser dem Gas nur eine durch die Brennerausbildung bestimmte Luftmenge eintreten und aus ihr das Abgas austreten kann, ist ein sich auf den Wirkungsgrad negativ auswirkender unkontrollierter Fremdluftzutritt in die Brennkammer nicht möglich. Die benötigte Verbrennungsluft kann entweder aus dem Aufstellungsraum der Heizungsanlage oder, wenn der Verdampfer der Wärmepumpe in einem Luftschacht angeordnet ist, an einer geeigneten Stelle aus diesem Luftschacht entnommen werden. Die durch die Mischrohre zugeführte Verbrennungsluftmenge kann entsprechend der Brennerbelastung genau gesteuert bzw. konstant gehalten werden. z.B. mit Hilfe von im Luftweg angeordneten, in der deutschen Patentanmeldung DE-A-3 018 752 genannten Mitteln. Das hat einen guten Wirkungsgrad des Brenners im gesamten Arbeitsbereich, insbesondere im Teillastbereich, zur Folge. Ausserdem ist der Regelbereich sehr gross: Die Belastung des Brenners kann beispielsweise bis auf ca. 40% der Nennwärmebelastung reduziert werden, ohne dass der Wirkungsgrad abnimmt.

Durch die vorgenannten Massnahmen wird eine optimale Ausnutzung des im Brenngas enthaltenen Wärmeinhalts und damit eine Verringerung der zum Erreichen der geforderten Heizleistung aufzuwendenden Brenngasmenge erreicht.

Weitere Vorteile sind die durch den geringen Abstand zwischen Brenner und Austreiber ermöglichte kompakte Bauweise von Brenner und Austreiber, und der durch die überstöchiometrische Luftvormischung bedingte geringe Schadstoffgehalt, insbesondere Stickstoffoxidgehalt im Abgas.

Für senkrecht stehende Austreiber eignet sich als bevorzugte Ausführungsform der Austreiberbeheizung ein ringförmiger Brenner, dessen Brennerplatte den Austreiber in einer solchen Höhe über dem Austreiberboden umgibt, dass nur der Bereich unmittelbar beheizt wird, in dem sich die reiche Lösung unter Berücksichtigung des Druckes und der Temperatur im Desorptionsgleichgewicht befindet. Dadurch wird eine optimale Ausdampfung des Kältemittels erreicht, ohne dass die sich am Boden des Austreibers sammelnde arme Lösung unnötig beheizt und in Turbulenzen gebracht wird.

Obwohl die Brennerabgase durch Umströmen des Austreibers den Grossteil ihres Wärmeinhalts abgegeben haben, besitzen sie noch einen beträchtlichen Wärmeinhalt, der bei bevorzugter Ausgestaltung der Erfindung durch die Anordnung von zwei Wärmetauschern im Abgasweg zur weiteren Steigerung der Heizleistung genutzt wird. Im ersten dieser Wärmetauscher wird die Temperatur des aus den Wärmepumpen - Wärmetauschern kommenden Heizungswassers erhöht durch Aufnahme von fühlbarer Wärme aus dem Abgas. Am zweiten Wärmetauscher, der vom Rücklauf-Heizungswasser durchströmt wird, tritt durch Abgabe von Wärme an das Heizungswasser eine weitgehende Kondensation des im Abgas enthaltenen Wasserdampfes ein, da der Taupunkt des Abgases — wegen des darin enthaltenen geringen Luftüberschusses — relativ hoch liegt.

Das am zweiten Wärmetauscher entstehende Kondensat wird über eine Kondensatabführung weggeführt.

Das Abgas wird mit Hilfe eines Abgasventilators ins Freie befördert, da es nach seiner erfindungsgemäss sehr starken Abkühlung nicht mehr genügend Auftriebskräfte besitzt, um in jedem Fall selbständig abzuströmen.

Eine besonders vorteilhafte Heizungsanlage, die die Aufstellung eines zusätzlichen konventionellen Heizkessels überflüssig macht, wird durch eine weitere Ausgestaltung des Erfindungsgegenstandes erreicht, die darin besteht, dass vor dem ersten Wärmetauscher ein zweiter Brenner angeordnet ist. Dieser Brenner wird in Abhängigkeit von der Aussentemperatur eingeschaltet, wobei gleichzeitig der Brenner vor dem Austreiber ausser Betrieb genommen wird. Der zweite Brenner liefert dann die gesamte benötigte Wärme für die Aufheizung des abgekühlten Heizungswassers. Der erste Wärmetauscher ist so dimensioniert, dass er etwa 90% der Wärmeleistung des zweiten Brenners übertragen kann.

Einzelheiten und weitere vorteilhafte Ausgestaltungen des Erfindungsgegenstandes werden nachfolgend anhand der in der Zeichnung dargestellten Ausführungsbeispiele erläutert. Es zeigen schematisch:

Fig. 1 eine Heizungsanlage mit den hier relevanten Elementen,

Fig. 2 in vergrösserter Darstellung die Einzelheit I in Fig. 1,

Fig. 3 einen Längsschnitt durch eine bevorzugte Austreiberbeheizung für einen senkrecht stehenden Austreiber, der nicht geschnitten ist, nach Anspruch 2.

In allen Figuren sind gleiche Bauteile mit gleichen Bezugsziffern versehen.

Wärmequelle für die Absorptionswärmepumpe ist die Umgebungsluft, die dem Verdampfer 14 über einen Luftschacht 12 mit Hilfe eines Luftgebläses 13 zugeführt wird.

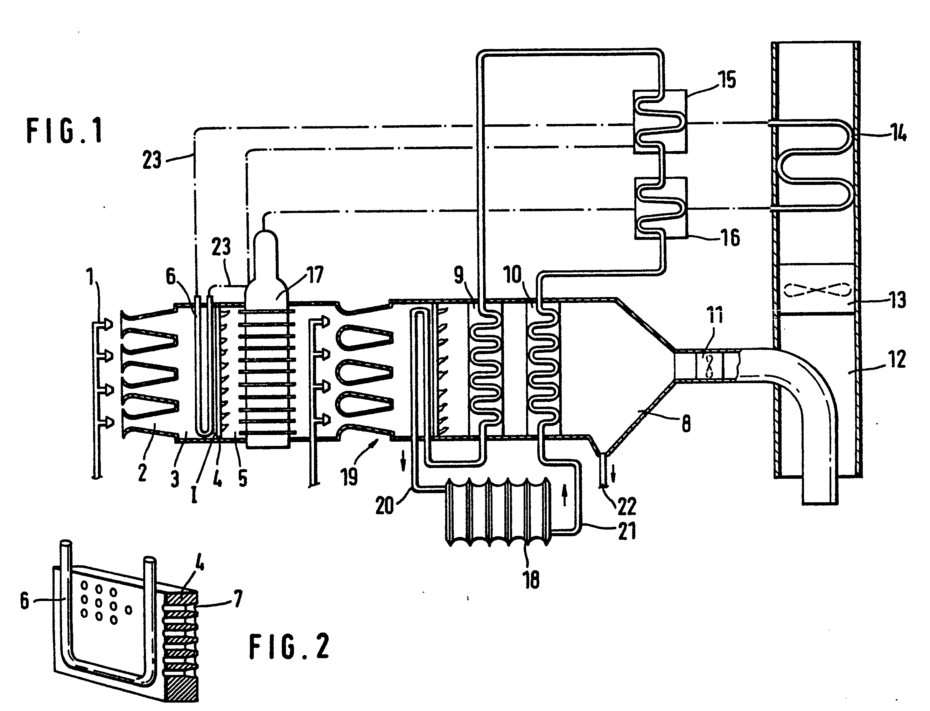

Zur Beheizung des Austreibers 17, d.h. als Antrieb der Absorptionswärmepumpe, dient ein überstöchiometrisch arbeitender Vormischbrenner, der bei dem in den Figuren 1 und 2 dargestellten Ausführungsbeispiel aus mehreren Gasdüsen 1, diesen zugeordneten parallelen Mischrohren 2, die in einer gemeinsamen Mischkammer 3 enden, einer rechteckigen Brennerplatte 4, die parallel zur Austreiberachse liegt, sowie einer gegenüber Fremdluftzutritt geschlossenen Brennkammer 5 besteht.

Die aus den Gasdüsen 1 austretenden Gasstrahlen strömen gemeinsam mit der gesamten an der Verbrennung beteiligten Luft, die dem Aufstellungsraum entnommen wird, in die Mischrohre 2.

Das gut durchmischte Brenngas-Verbrennungsluftgemisch strömt aus der Mischkammer 3 durch die Gemischdurchtrittsöffnungen 7 der Brennerplatte 4 und verbrennt in der Brennkammer 5 mit sehr kurzen Flammen, die zusammen einen dichten Flammenteppich bilden, und zwar deshalb, weil die Vielzahl von Gemischdurchtrittsöffnungen 7 über den gesamten Brennerplattenquerschnitt gleichmässig verteilt sind. Bei dem dargestellten Beispiel sind für eine Leistung von 15 kW auf einer Fläche von ca. 200 cm² etwa 1300 Öffnungen mit einem Eintrittsdurchmesser von etwa 2 mm untergebracht, der sich zur Flammenseite hin um etwa 50% z.B. konisch erweitert.

Die hohe Wärmebelastung pro Flächeneinheit von ca. 0,75 W/mm² und die extrem kurzen Flammen bewirken eine starke Aufheizung der Brennerplatte 4, die demzufolge gekühlt werden muss. Deshalb ist auf der Mischkammerseite der Brennerplatte 4, wie aus Fig. 2 ersichtlich ist, am Rand eine Kühlschlange 6 aufgelötet, die in das (strichpunktiert dargestellte) Stoffpaarkreislauf-Teilstück 23 eingebunden ist, d.h. die Kühlschlange 6 wird von der aus dem Absorber 15 bzw. der nicht dargestellten Lösungspumpe kommenden reichen Lösung durchströmt. — Auch die anderen Strömungswege des Lösungs- bzw. Kältemittels sind zum besseren Verständnis strichpunktiert eingezeichnet. — Die Kühlschlange 6 besteht aus einem Material, das gegen das sie durchströmende Medium resistent ist. Die reiche Lösung nimmt an der Brennerplatte 4 Wärme auf und strömt dann in den Austreiber 17.

Die extrem kurzen Flammen ermöglichen es, den Austreiber 17 unmittelbar, in einem Abstand von etwa 30 mm, neben der Brennerplatte 4 anzuordnen und so die Abmessungen der Brennkammer und die davon abhängigen Abstrahlungsverluste sehr klein zu halten.

Die Brennerabgase geben den grössten Teil ihrer Wärme an den mit symbolisiert dargestellten Wärmetauscherrippen versehenen Austreiber 17 ab, während sie ringförmig an diesem vorbeiströmen. Sie werden dabei bereits auf etwa 170°C abgekühlt.

Im weiteren Strömungsweg der Abgase sind in der Abgasführung 8 unmittelbar hintereinander zwei Wärmetauscher 9 und 10 angeordnet. Der erste Wärmetauscher 9 ist vorteilhafterweise in den Heizungswasservorlauf 20 eingebunden. Das Heizungswasser kommt somit aus den Wärmepumpen - Wärmetauschern 15 und 16, fliesst durch den Abgaswärmetauscher 9 sowie die Kühlschlange des unten beschriebenen zweiten Brenners 19 und strömt dann zum Verbraucher 18.

Bei einer Temperaturdifferenz von etwa 10 K zwischen Vor- und Rücklauf beträgt die Temperaturerhöhung in der Kühlschlange des zweiten Brenners 19 und im ersten Wärmetauscher 9 zusammen etwa 1 K. Das Abgas kühlt sich dabei von etwa 170°C auf 70°C ab.

Im sich anschliessenden zweiten Wärmetauscher 10 wird das Abgas so weit abgekühlt, dass dabei der in ihm enthaltene Wasserdampf weitgehend kondensiert. Dieser Wärmetausch ist nur auf dem Temperaturniveau des Heizungswasserrücklaufs möglich, d.h. das am Verbraucher 18 abgekühlte Heizungswasser 21 strömt vor seinem Eintritt in die Wärmepumpen - Wärmetauscher 16, 15 durch den zweiten Wärmetauscher 10, in dem es ebenfalls um etwa 1 K erwärmt wird.

Es werden bekannte Lamellenwäremtauscher verwendet, die so in der Abgasführung 8 angeordnet sind, dass ihre Lamellen senkrecht stehen, damit das Kondensat abfliessen und über die Kondensatabführung 22 weggeführt werden kann.

Der hinter den Wärmetauschern angeordnete Abgasventilator 11 transportiert die Abgase durch die Abgasführung 8, die in den Luftschacht 12 stromabwärts des Verdampfers 14 und des Luftgelbäses 13 einmündet. Bei der dargestellten Ausführungsform verläuft die Abgasführung 8 weiter im Luftschacht, bis über dessen Ende hinaus. In jedem Fall wird bewirkt, dass der aus dem Luftschacht austretende grosse Luftstrom die ohnehin schadstoffarmen Abgase so stark verdünnt, dass auf einen Kaminanschluss verzichtet werden kann, wodurch die Aufstellungsmöglichkeiten der Luft-Absorptionswärmepumpe stark erweitert werden. Der Sog des Abgasventilators wirkt sich auf die Luftansaugung zum Brenner dahingehend aus, dass der Gasimpuls, der zur Verbrennungsluftansaugung dient, vom Sog des Abgasventilators überlagert wird.

Zwischen Austreiber 17 und erstem Wärmetauscher 9 ist, wie bereits oben erwähnt, ein zweiter Brenner 19 angeordnet. Die Achse dieses Brenners liegt im dargestellten Beispiel in gerader Linie zur Achse des ersten Brenners, d.h. die beiden Brennerplatten stehen hier parallel zueinander. Andere Anordnungen der Brenner zueinander sind ebenfalls möglich. Der zweite Brenner 19 besteht aus den gleichen Bauteilen wie der Brenner vor dem Austreiber. — Es ist ebenfalls möglich, als zweiten Brenner einen bekannten, konventionellen Brenner zu verwenden, wenn für ausreichende Verbrennungsluftzufuhr gesorgt ist. — Die gesamte für den Betrieb des zweiten Brenners benötigte Luft gelangt durch den Sog des Ventilators durch die Mischrohre 2 des ersten Brenners in die Abgasführung 8 der Heizungsanlage und damit in den Ansaugbereich der Gasdüsen des zweiten Brenners. Es ist vorteilhaft, in die Abgasführung 8 vor dem zweiten Brenner eine Drosselblende zur Feineinstellung der Verbrennungsluftmenge anzubringen. Die Brennerplatte des zweiten Brenners wird durch den Heizungswasservorlauf 20 gekühlt, und zwar durchströmt dieser vollständig die Brennerplatten-Kühlschlange nach seinem Austritt aus dem ersten Wärmetauscher 9, wenn der zweite Brenner in Betrieb ist. Bei Wärmepumpenbetrieb fliesst nur ein Teilstrom des Heizungswasservorlaufs durch die Brennerplatten-Kühlschlange. Die Regelung der Ströme kann z.B. mit einem im Heizungswasservorlauf eingebauten handelsüblichen PKW-Kühlwasser-Thermostat erfolgen.

Der zweite Brenner 19 wird in Betrieb genommen, wenn die Aussentemperatur die Grenztemperatur unterschreitet, bei der der Wärmepumpenbetrieb wirtschaftlich nicht mehr sinnvoll ist, und demzufolge der Brenner vor dem Austreiber 17 abgeschaltet wird. Die Zündung, Steuerung und Überwachung beider Brenner übernimmt ein bekannter, nicht dargestellter Feuerungsautomat. Da der zweite Brenner 19 allein die gesamte für die Heizungsanlage benötigte Wärme — auch am kältesten Tag — über die Wärmetauscher 9 und 10 liefern muss, ist seine Leistung entsprechend höher, ungefähr etwa doppelt so gross, als die des ersten Brenners. Deshalb muss die Förderleistung des Abgasventilators bei Brennerwechsel der Leistung des jeweils in Betrieb befindlichen Brenners angepasst werden. Eine Regelung der Ventilator-Förderleistung durch Änderung seiner Drehzahl ist jedoch überraschenderweise nicht notwendig, wenn der Ventilator erfindungsgemäss zwischen Austreiber und zweitem Brenner angeordnet ist. Die Änderung der Fördermenge ergibt sich hierbei selbsttätig infolge der Differenz der Dichten von heissem Abgas — mit dem der Ventilator bei Wärmepumpenbetrieb beaufschlagt wird — und kalter Verbrennungsluft, die der Ventilator bei konventionellem Heizbetrieb fördert.

Die Grössen der Wärmetauscher 9 und 10 sind so gewählt, dass sowohl eine optimale Nutzung der Abgaswärme des ersten Brenners nach dem Austreiber 17 als auch ein guter Wärmetausch mit den heissen Abgasen des zweiten Brenners — bei abgeschalteter Wärmepumpe —, der auf einem wesentlich höheren Temperaturniveau erfolgt, möglich ist. Wenn statt der erfindungsgemässen zwei Wärmetauscher im Abgasweg nur ein an sich bekannter Abgaswärmetauscher vorhanden ist, kann der Brenner auch diesen Wärmetauscher, der ausreichend dimensioniert sein muss, beaufschlagen.

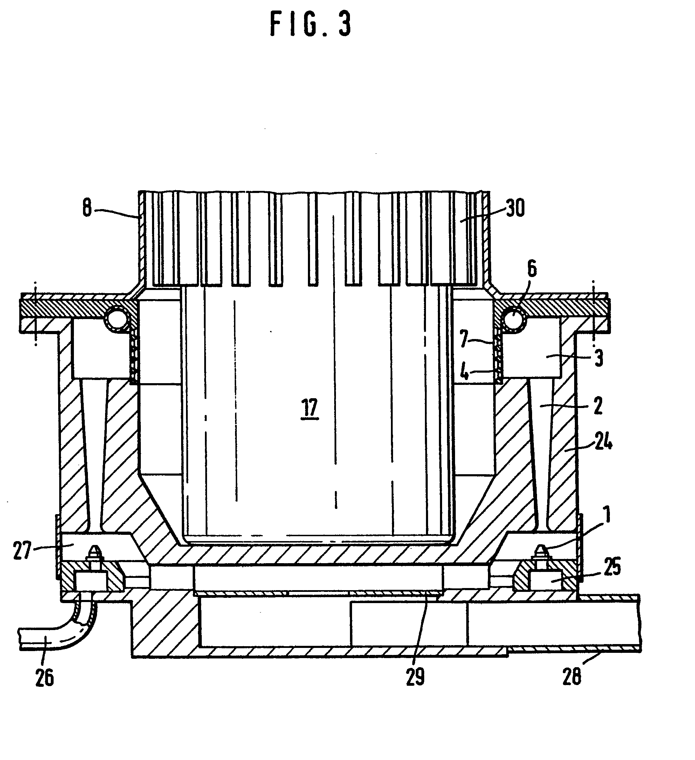

In Fig. 3 ist eine andere, besonders vorteilhafte Ausführungsform der Austreiberbeheizung dargestellt.

Der untere Teil des Austreibers 17 ist konzentrisch von dem topfförmigen Brennergehäuse 24 umgeben, in das zwölf gleichmässig auf den Umfang verteilte konische Mischrohre 2 integriert sind. — Die Mischrohre können auch zylindrisch sein, mit der Wirkung, dass das Gas-Luft-Gemisch einem starken Druckabfall unterworfen ist. Die Zahl der Mischrohre ist abhängig vom Durchmesser des Austreibers. Die Verwendung von mindestens sechs Mischrohren hat sich als vorteilhaft erwiesen. — Vor jedem Mischrohr befindet sich eine Gasdüse 1. Alle Gasdüsen sind an einen gemeinsamen Ringkanal 25 oder eine Ringleitung angeschlossen, der oder die mit einer Gasleitung 26 verbunden ist. Die Gasdüsen 1 befinden sich in einem geschlossenen Luftansaugraum 27, der über die Luftleitung 28 mit einem nicht dargestellten Luftkanal verbunden ist, so dass die Verbrennungsluft nicht dem Aufstellungsraum entnommen werden muss.

Vor dem Anschluss des Luftansaugraumes 27 an die Luftleitung 28 befindet sich eine Drosselblende 29 zur Feineinstellung des Luft-Volumenstromes.

Die mit Hilfe des Gasimpulses und des Abgasventilators angesaugte Verbrennungsluft strömt unter Vermischung mit dem Brenngas durch die Mischrohre 2 in die gemeinsame ringförmige Mischkammer 3, die eine zylinderförmige Brennerplatte 4 aufweist, die den Austreiber 17 in einer Höhe, die etwa der Mischrohrlänge entspricht, umgibt und die an das Gehäuse 24 angeflanscht ist. Die Gemischdurchtrittsöffnungen 7 verlaufen senkrecht zur Austreiberachse und sind wie diejenigen der in Fig. 2 dargestellten und bereits beschriebenen Brennerplatte ausgeführt. Die Brennerplatte 4 wird ebenfalls mit Hilfe einer von reicher Lösung aus dem Absorber durchflossenen Kühlschlange 6 gekühlt. — Die Brennerplatte 4 kann auch als ringförmige Platte ausgeführt werden, bei der die Gemischdurchtrittsöffnungen parallel zur Austreiberachse verlaufen.

Um das Gewicht des Brenners gering zu halten, ist er bzw. sind die meisten Einzelteile aus Aluminium, um den Fertigungsaufwand gering zu halten, zweckmässigerweise als Druckgussteile hergestellt. Die Kühlschlange 6 muss bekanntermassen gegenüber der reichen Lösung resistent sein und besteht aus Stahlrohr. Am Umfang des Austreibers sind oberhalb des Brenners in dem mit Flüssigkeit gefüllten Bereich bekannte senkrechte Wärmetauscherrippen 30 angebracht, über die das entlangströmende Abgas seine Wärme an den Austreiber abgibt.

Durch eine geeignete Wahl der Leistungen von erstem und zweitem Brenner kann der Anteil des konventionellen Heizbetriebes (mit dem zweiten Brenner) an der Jahresheizarbeit gering gehalten werden.

Der gute Teillastwirkungsgrad des für die Austreiber-Beheizung verwendeten Brenners eröffnet jedoch auch die Möglichkeit, ohne zweiten Brenner die gesamte Heizleistung unabhängig von der Aussentemperatur durch die Absorptionswärmepumpen-Heizungsanlage dadurch abzudecken, dass der erste bzw. einzige Brenner nur bei sehr niedrigen Aussentemperaturen mit voller Leistung, während der meisten Zeit dagegen mit Teillast betrieben wird.

**Patentansprüche**

1. Heizungsanlage mit einer gasbeheizten Absorptionswärmepumpe, deren Austreiber in der Abgasführung des Gasbrenners angeordnet ist und deren Lösungs- bzw. Kältemittelkreislauf über Wärmetauscher mit dem Heizungswasserkreislauf gekoppelt ist, dadurch gekennzeichnet, dass der mit überstöchiometrischer Luftvormischung arbeitende Gasbrenner aus einer oder mehreren Gasdüsen (1), einem oder mehreren parallelen Mischrohren (2), einer sich anschliessenden Mischkammer (3), einer aus gut wärmeleitendem Material bestehenden Brennerplatte (4) und einer gegenüber Fremdluftzutritt geschlossenen Brennkammer (5) besteht, an die sich der in der Abgasführung (8) angeordnete Austreiber (17) derart anschliesst, dass der Abstand zwischen Brennerplatte (4) und Austreiber (17) weniger als etwa 50 mm, vorzugsweise weniger als 30 mm, beträgt, und dass die Brennerplatte (4) eine Vielzahl von über den gesamten Brennerplattenquerschnitt verteilten Gemischdurchtrittsöffnungen (7), mindestens vier Öffnungen pro $cm^2$, sowie eine Kühlschlange (6) aufweist, die in den Strömungsweg für die reiche Lösung (23) zwischen Absorber (15) und Austreiber (17) eingebunden ist.

2. Heizungsanlage nach Anspruch 1, deren Austreiber senkrecht steht, dadurch gekennzeichnet, dass der untere Teil des Austreibers (17) konzentrisch von einem topfförmigen Brennergehäuse (24) umgeben ist, in das mehrere, vorzugsweise sechs bis zwölf gleichmässig auf den Umfang verteilte Mischrohre (2) integriert sind, die in einer ringförmigen Mischkammer (3) enden, dass alle den Mischrohren (2) zugeordneten Gasdüsen (1) an einen gemeinsamen Ringkanal (25) angeschlossen sind, der einen Gasleitungsanschluss (26) besitzt, und dass die Brennerplatte (4) den Austreiber in mittlerer Höhe über dem Austreiberboden, die ungefähr der Mischrohrlänge entspricht, konzentrisch umgibt.

3. Heizungsanlage nach Anspruch 1 oder 2, dadurch gekennzeichnet, dass die Gasdüsen (1) sich in einem geschlossenen Luftansaugraum (27) befinden, der über eine Drosselblende (29) mit einer zu einem Luftschacht führenden Luftleitung (28) verbunden ist.

4. Heizungsanlage nach einem der Ansprüche 1 bis 3, dadurch gekennzeichnet, dass der gesamte Brenner — mit Ausnahme der Kühlschlange (6) — aus Aluminium, vorzugsweise im Druckgussverfahren, gefertigt ist.

5. Heizungsanlage nach einem der Ansprüche 2 bis 4, dadurch gekennzeichnet, dass die Brennerplatte (4) zylindrisch mit senkrecht zur Austreiberachse verlaufenden Gemischdurchtrittsöffnungen (7) ausgebildet ist.

6. Heizungsanlage nach einem der Ansprüche 2 bis 4, dadurch gekennzeichnet, dass die Brennerplatte (4) ringförmig mit parallel zur Austreiberachse verlaufenden Gemischdurchtrittsöffnungen (7) ausgebildet ist.

7. Heizungsanlage nach einem der Ansprüche 1 bis 7, dadurch gekennzeichnet, dass in der Abgasdurchtrittsöffnungen (7) der Brennerplatte (4) einen Durchmesser von etwa 1 mm bis 3 mm, vorzugsweise 2 mm, aufweisen, der sich zur Flammenseite hin um etwa 50% erweitert.

8. Heizungsanlage nach einem der Ansprüche 1 bis 7, dadurch gekennzeichnet, dass in der Abgasführung (8) hinter dem Austreiber zwei korrosionsbeständige Wärmetauscher (9, 10) und ein Abgasventilator (11) angeordnet sind, und dass der in Strömungsrichtung der Abgase erste Wärmetauscher (9) in den Heizungswasservorlauf (20) und der zweite Wärmetauscher (10) in den Heizungswasserrücklauf (21) eingebunden ist, und dass eine Kondensatabführung (22) im Bereich des zweiten Wärmetauschers (10) vorhanden ist.

9. Heizungsanlage nach Anspruch 8, dadurch gekennzeichnet, dass beide Wärmetauscher (9, 10) als Lamellenwärmetauscher ausgebildet und derart in der Abgasführung (8) angeordnet sind, dass ihre Lamellen senkrecht stehen.

10. Heizungsanlage nach Anspruch 8 oder 9, dadurch gekennzeichnet, dass vor dem ersten Wärmetauscher (9) ein zweiter Brenner (19) angeordnet ist, der aus den gleichen Bauteilen wie der vor dem Austreiber (17) angeordnete Brenner entsprechend Anspruch 1 besteht, und dass die Kühlschlange der Brennerplatte des Brenners (19) in den Strömungsweg des Heizungswasservorlaufes (20), hinter dem ersten Wärmetauscher (9), eingebunden ist.

11. Heizungsanlage nach Anspruch 10, dadurch gekennzeichnet, dass der Abgasventilator (11) im Strömungsweg der Abgase zwischen Austreiber (17) und zweitem Brenner (19) angeordnet ist.

12. Verfahren zum Betreiben der Heizungsanlage nach Anspruch 10 oder 11, dadurch gekennzeichnet, dass — gesteuert von der Aussentemperatur — entweder der Brenner vor dem Austreiber (17) oder der vor dem Wärmetauscher (9) angeordnete zweite Brenner (19) in Betrieb gesetzt wird, und dass die Förderleistung des Abgasventilators (11) der Leistung des in Betrieb befindlichen Brenners angepasst wird.

**Claims**

1. A system for space heating incorporating a gas-fuelled absorption-type heat pump whose generator is integrated in the gas burner flue system and whose solvent and refrigerant circuit interacts with a water circuit for heat distribution to the space being heated characterized in that said gas burner combusts a premixed fuel-lean gas/air mixture and consists, without limitation, of one or several gas injectors (1), one or several parallel mixing tubes (2) connected to a mixing chamber (3), a burner plate of material of high thermal conductivity and a room-sealed combustion chamber (5), the generator (17) of said gas-fuelled absorption heat pump being arranged in the flue system (8) of said combustion chamber so that the distance between the burner plate (4) and the generator (17) is less than approximately 50 mm and preferably less than 30 mm and the burner plate (4) having a number of mixture orifices (7) distributed over the entire burner plate face, said number not being less than four per square centimeter, and a cooling heat exchanger (6) integrated in the pipework (23) carrying the strong solution between the absorber (15) and the generator (17).

2. A system for space heating according to claim 1 wherein the generator arrangement is vertical characterized in that the lower part of said generator (17) is surrounded concentrically by a post-shaped burner housing integrating several and preferably six to twelve mixing tubes (2) distributed evenly over the circumference of said housing and opening into an annular mixing chamber (3) and in that all gas injectors (1) connected with said mixing tube (2) are connected to a common loop (25) fitted with a gas inlet (26) and in that the burner plate (4) concentrically surrounds the generator (17) at a height from the bottom of said generator approximately equal to the length of the mixing tubes (2).

3. A system for space heating according to any of claims 1 and 2 characterized in that the gas injectors (1) are arranged in a closed air chamber (27) connected with and separated from air pipework (28) to an air duct by means of an air flow control valve (29).

4. A system for space heating according to any of claims 1 through 3 characterized in that the entire burner system with the exception of the cooling heat exchanger (6) is made of aluminium preferably by the die-casting process.

5. A system for space heating according to any of claims 2 to 4 characterized in that the burner plate (4) is cylindrical and incorporates mixture orifices (7) whose axes are perpendicular to the axis of the generator (17).

6. A system for space heating according to any of claims 2 to 4 characterized in that the burner plate (4) is annular and incorporates mixture orifices (7) whose axes are parallel to the axis of the generator (17).

7. A system for space heating according to any of claims 1 through 6 characterized in that the diameters of the mixture orifices (7) in the burner plate (4) are 1 to 3 mm and preferably 2 mm and increase by some 50% towards the outles end of said mixing orifices (7).

8. A system for space heating according to any of claims 1 through 7 characterized in that two corrosion-resistant heat exchangers (9, 10) and a flue gas fan (11) are arranged in the flue system (8) downstream of the generator (17) and in that the upstream heat exchanger (9) of said two heat exchangers is tied into the flow water system (20) and the downstream heat exchanger (10) of said two heat exchangers is tied into the return water system (21) of the system for the distribution of heat for space heating and in that a condensate removal device (22) is provided in the area of the heat exchanger (10).

9. A system for space heating according to claim 8 characterized in that the heat exchangers (9, 10) are fin-fan heat exchangers arranged in the flue system (8) so that the fins will be vertical.

10. A system for space heating according to any of claims 8 or 9 characterized in that a second burner (19) consisting of the same or similar components as the burner according to claim 1 arranged upstream of the generator (17) is arranged upstream of heat exchanger (9) and in that the cooling heat exchanger of the burner plate (19) is integrated in the flow water system (20) downstream of heat exchanger (9).

11. A system for space heating according to claim 10 characterized in that the flue gas fan (11) is integrated in the flue system between the generator (17) and the second burner (19).

12. A method of operating the system for space heating according to any of claims 10 or 11 characterized in that the burner upstream of the generator (17) or the second burner (19) upstream of the heat exchanger (9) is operated as a function of the outdoor temperature and in that the speed of the flue gas fan (11) is adjusted to the heat output of the operating burner of the two burners referred to hereinabove.

**Revendications**

1. Installation de chauffage équipée d'une pompe à chaud à gaz à absorption dont le bouilleur est disposé dans le circuit d'évacuation des produits de combustion du brûleur à gaz et le circuit frigorifique est relié par l'échangeur de chaleur au circuit de l'eau de chauffage, caractérisée par le fait que le brûleur fonctionnant avec un prémélange en excès d'air se compose d'un ou de plusieurs injections (1), d'un ou de plusieurs tubes de mélange (2) disposés en parallèle, suivis d'une chambre de mélange (3), d'une plaque de brûleur (4) consistant d'un matériau caloriporteur et d'une chambre de combustion (5) à circuit étanche, que le bouilleur (17) placé dans le circuit d'évacuation (8) est raccordé aux installations en amont de telle manière que l'écart entre la plaque du brûleur (4) et le bouilleur (17) est inférieur à 50 mm, de préférence même inférieur à 30 mm, que la plaque du brûleur (4) disposé d'un grand nombre d'orifices de sortie du mélange (7) répartis sur toute la section de la plaque du brûleur de façon à ce qu'il y ait au moins quatre orifices par $cm^2$, que la plaque est également équipée d'un serpentin de refroidissement intercalé dans le tube (6) acheminant la solution riche (23) de l'absorbeur (15) au bouilleur (17).

2. Installation de chauffage suivant revendication 1, dont le bouilleur est disposé verticalement, caractérisée par le fait que la partie inférieure du bouilleur (17) est entourée de façon concentrique par le carter du brûleur (24) auquel sont intégrés plusieurs — de préférence six ou douze — tubes de mélange (2) uniformement répartis sur toute la circonférence et débouchant dans une chambre de mélange annulaire (3), que les injecteurs (1) des tubes de mélange (2) sont raccordés à une couronne annulaire (25) commune, permettant le branchement d'une conduite à gaz (26) et que la plaque du brûleur (4) entoure le bouilleur de façon concentrique à mi-hauteur du fond du bouilleur, ce qui correspond à environ la longueur des tubes de mélange.

3. Installation de chauffage suivant revendication 1 ou 2, caractérisée par le fait que les injecteurs (1) sont placés dans une chambre d'aspiration d'air (27) étanche, reliée par un organe détendeur (29) à une conduite d'air (28), raccordée à une gaine d'aspiration.

4. Installation de chauffage suivant l'une des revendications 1 à 3, caractérisée par le fait que l'ensemble du brûleur — à l'exception du serpentin de refroidissement (6) — est fabriqué en aluminium, de préférence coulé sous pression.

5. Installation de chauffage suivant l'une des revendications 2 à 4, caractérisée par le fait que la plaque du brûleur (4) est de forme cylindrique avec des orifices de sortie du mélange (7) disposés perpendiculairement à l'axe du bouilleur.

6. Installation de chauffage suivant l'une des revendications 2 à 4. caractérisée par le fait que la plaque du brûleur (4) est de forme annulaire avec des orifices de sortie du mélange (7) disposés parallèlement à l'axe du bouilleur.

7. Installation de chauffage suivant l'une des revendications 1 à 6, caractérisée par le fait que les orifices de sortie de mélange (7) de la plaque du brûleur (4) ont un diamètre d'environ 1 à 3 mm, de préférence 2 mm, s'élargissant d'environ 50% du côté aval.

8. Installation de chauffage suivant l'une des revendications 1 à 7, caractérisée par le fait que dans le circuit d'évacuation des produits de combustion (8) en aval du bouilleur sont disposés deux échangeurs de chaleur (9, 10) résistant à la corrosion et un ventilateur des fumées (11) et que l'échangeur de chaleur amont (9) est raccordé au circuit d'eau de départ (20) et le deuxième échangeur de chaleur aval (10) est raccordé au circuit d'eau de retour (21) et que dans le périmètre du deuxième échangeur de chaleur (10) se trouve un dispositif d'évacuation des condensats (22).

9. Installation de chauffage suivant revendication 8, caractérisée par le fait que les deux échangeurs de chaleur (9, 10) sont conçus sous forme d'échangeurs de chaleur à ailettes et disposés dans le circuit d'évacuation des produits de combustion (8) de telle façon que leurs ailettes sont placées verticalement.

10. Installation de chauffage suivant revendication 8 ou 9, caractérisée par le fait qu'à l'amont du premier échangeur de chaleur (9) est disposé un deuxième brûleur (19) se composant des mêmes éléments que le brûleur à l'amont du couilleur (17) selon revendication 1, et que le serpentin de refroidissement de la plaque du brûleur (19) est intégré dans le tube de l'eau de départ (20) en aval du premier échangeur de chaleur (9).

11. Installation de chauffage suivant revendication 10, caractérisée par le fait que le ventilateur des fumées (11) est dipsosé dans l'écoulement des fumées entre le bouilleur (17) et le deuxième brûleur (19).

12. Procédé de fonctionnement de l'installation de chauffage suivant revendication 10 ou 11, caractérisé par le fait que — en fonction de la température ambiante — soit le brûleur disposé à l'amont du bouilleur (17) soit le deuxième brûleur (19) disposé à l'amont de l'échangeur de chaleur (9), sont mis en marche et que le régime du ventilateur des fumées (11) est réglé sur le débit du brûleur en service.

FIG.1

FIG.2

# FIG. 3